# EUROPEAN PATENT APPLICATION

(11) **EP 4 715 360 A1**
(43) Date of publication of application: **25.03.2026**
(21) Application number: 23939180.8
(22) Date of filing: 13.09.2023
(51) Int. Cl.: G01M 11/00

(54) **END FACE COUPLER TESTING DEVICE AND METHOD, AND TEST ARRAY**

(30) Priority: 26.05.2023 CN 202310610390
(71) Applicant: SILITH TECHNOLOGY PTE. LTD., Singapore 637145 (SG)
(72) Inventor: ZHANG, Xingyu, Shanghai 201306 (CN)
(74) Representative: Bayramoglu et al.
(86) International application number: PCT/CN2023/118493
(87) International publication number: WO 2024/244205

(57) **Abstract**

The present invention provides an edge coupler test device, method and a test array. The edge coupler test device arranged on optical chip, comprises a loopback structure, coupled with an external optical fiber array; a cascaded test structure, configured for testing an on-chip mode field conversion loss of a TE polarized light and a TM polarized light; a polarization splitting module, connected with the cascade test structure, and configured for coupling the TE polarized light and the TM polarized light into the cascaded test structure for testing and coupling them out; a TE grating coupling module, connected with an input end and an output end of the polarization splitting module, and configured for coupling the TE polarized light into the cascaded test structure and coupling it out; and a TM grating coupling module, connected with the input end and the output end of the polarization splitting module, and configured for coupling the TM polarized light into the cascaded test structure and coupling it out. Coupling loss of the TE polarized light and the TM polarized light can be respectively tested, thus saving space in chip and improving use efficiency of chip.

## Description

### CROSS-REFERENCE TO RELATED APPLICATION

The present application claims priority to Chinese Patent Application No. 202310610390.3, filed on May 26, 2023. The content of the above application is incorporated herein by reference.

### TECHNICAL FIELD

The present invention relates to the technical field of optical technology, in particular to an edge coupler test device, a method and a test array.

### BACKGROUND ART

An edge coupler (EC) is used to couple light into (or out of) a photonic integrated circuit (PIC), with advantages of a low coupling loss, a large operating wavelength range, and capable of carrying both TE-polarized light and TM-polarized light simultaneously. The EC is often coupled with an external optical fiber (or a fiber array, FA), and in order to achieve a better coupling effect, a mode field of an EC edge shall be matched with a mode field of an optical fiber. In the PIC, a size of the mode field of a conventional waveguide is relatively small, while a size of the mode field of the optical fiber is relatively large, thus a transition region (in an embodiment, a wedge-shaped structure) shall be arranged inside a chip so as to achieve conversion of the size of the mode fields from small to large. Therefore, a coupling loss of the EC comprises two parts, one is a mode field conversion loss in the transition region from a conventional waveguide (having a small mode field) to an EC edge (having a large mode field), another is an optical field overlap loss between a mode field of the EC edge and a mode field of the external optical fiber (that is, a loss under a case of two mode fields not being matched ideally).

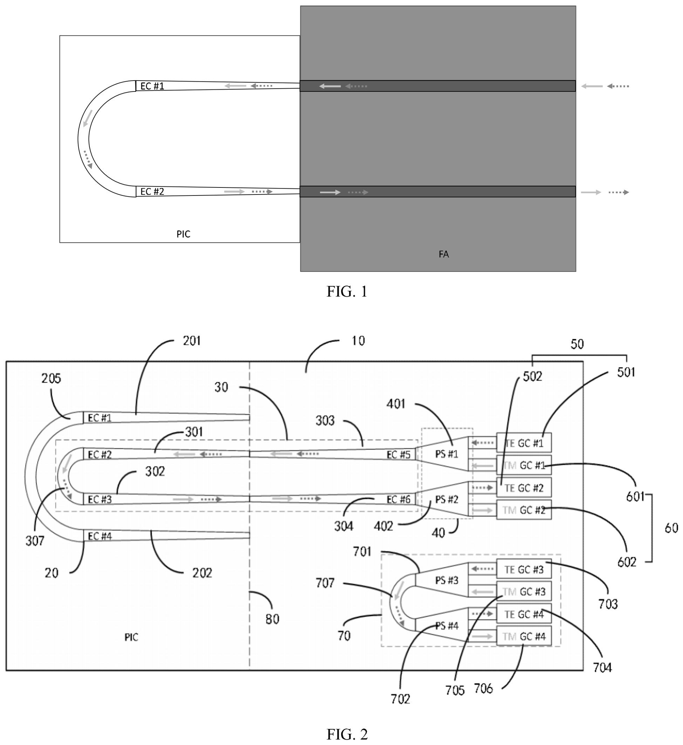

In recent years, fiber array (FA) has been applied more in research and development (R&D), production test and mass production. During a stage of the production test or the R&D, in order to verify performance indicators of the EC including the coupling loss and more, it is necessary to arrange a test structure for the coupler on a PIC. A common practice is to arrange a loopback structure at an edge of a chip, comprising two ECs and a curved waveguide connecting the two ECs, as shown in FIG. 1. A spacing between the two ECs is arranged equal to a channel spacing in the FA (for example, 250µm), so that the chip is able to be butt-coupled with the FA, and to couple light into and out of the chip respectively by two channels in the FA (shown by arrows in FIG. 1), further to test the coupling loss of the EC. An EC is able to support two polarizations of both TE and TM, correspondingly, a coupling loss of the EC under both a TE polarized light and a TM polarized light shall be tested (represented by a solid line and a dashed line, respectively).

However, the coupling loss measured by such a method includes an on-chip mode field conversion loss and an optical field overlap loss of an optical fiber, that is, a gross coupling loss of the EC, and it is impossible to obtain a respective value of each of both the on-chip mode field conversion loss and the optical field overlap loss of the optical fiber, thus it is impossible to analyze a source of each part of loss specifically so as to provide a sufficient and comprehensive feedback for a design improvement and iteration. If it is needed to split the two, an additional test structure will be required, such as adding a cascaded EC and a grating coupler (GC) to test the mode field conversion loss of a chip, which occupies more chip space. Further, usually, a same GC is unable to support two polarizations of TE and TM at a same time, it is necessary to build a set of test structures for each of the two polarizations to test the mode field conversion loss under the TE polarization and the TM polarization, respectively. Thus, it is required to arrange multiple test structures to achieve a function stated above, occupying the chip space, reducing a test efficiency and increasing a cost.

Therefore, it is necessary to provide a novel edge coupler test device, method and test array to solve the problem in the prior art, as mentioned above.

### SUMMARY OF THE INVENTION

An objective of the present invention is to provide an edge coupler test device, a method and a test array designed to not only test the coupling loss of both the TE polarized light and the TM polarized light at a same time, but also decompose an on-chip mode field conversion loss and an optical field overlap loss, thus saving the space inside the chip, improving the usage efficiency of the chip and reducing the cost.

In order to achieve the objective stated above, the present invention discloses an edge coupler test device arranged on a photonic integrated circuit (PIC), comprising:
a loopback structure, arranged on the PIC, and configured to couple with an external optical fiber array;
a cascaded test structure, arranged on the PIC, and configured to test an on-chip mode field conversion loss of both a TE polarized light and a TM polarized light;
a polarization splitting module, connected to the cascaded test structure, and configured to couple the TE polarized light and the TM polarized light respectively into the cascaded test structure for a test and couple them out respectively;
a TE grating coupling module, connected to both an input end and an output end of the polarization splitting module, and configured to couple the TE polarized light into the cascaded test structure for a test and couple it out;
a TM grating coupling module, connected to both the input end and the output end of the polarization splitting module, and configured to couple the TM polarized light into the cascaded test structure for a test and couple it out; and
a calibration structure configured to acquire calibration data of both the TE polarized light and the TM polarized light.

A beneficial effect of the edge coupler test device in the present invention is that by arranging the polarization splitting module, the TE grating coupling module and the TM grating coupling module, it helps to transmit the TE polarized light and the TM polarized light into the cascaded test structure respectively to perform a coupling test, helps to export the TE polarized light and the TM polarized light out respectively after passing through the polarization splitting module, and helps to test the on-chip mode field conversion loss of both the TE polarized light and the TM polarized light respectively through a same cascaded test structure, and thus it is beneficial to save the space inside a chip and improve a test efficiency.

Preferably, the cascaded test structure includes a first curved waveguide and an edge coupler group, the edge coupler group includes a first edge coupler, a second edge coupler, a third edge coupler and a fourth edge coupler, wherein one end of the first edge coupler is coupled to one end of the third edge coupler, another end of the first edge coupler is coupled to one end of the second edge coupler by the first curved waveguide, another end of the second edge coupler is coupled to one end of the fourth edge coupler, and both another end of the third edge coupler and another end of the fourth edge coupler are coupled to the polarization splitting module.

Preferably, the polarization splitting module includes a first polarization splitter and a second polarization splitter, an input end of the first polarization splitter includes a first TE input end and a first TM input end, wherein an output end of the first polarization splitter is coupled to the cascaded test structure, an input end of the second polarization splitter is coupled to an output end of the cascaded test structure; and an output end of the second polarization splitter includes a first TE output end and a first TM output end, the TE grating coupling module includes a first TE grating coupler and a second TE grating coupler, the TM grating coupling module includes a first TM grating coupler and a second TM grating coupler, wherein the TE polarized light is coupled into the first TE input end through the first TE grating coupler and is then coupled into the cascaded test structure and coupled out to the second TE grating coupler through the first TE output end, and the TM polarized light is coupled into the first TM input end through the first TM grating coupler and is then coupled into the cascaded test structure and coupled out to the second TM grating coupler through the first TM output end.

Preferably, the calibration structure includes a third polarization splitter, a fourth polarization splitter, a third TE grating coupler, a fourth TE grating coupler, a third TM grating coupler and a fourth TM grating coupler, wherein an output end of the third polarization splitter is coupled to an input end of the fourth polarization splitter by a second curved waveguide, and an input end of the third polarization splitter includes a second TE input end and a second TM input end, an output end of the fourth polarization splitter includes a second TE output end and a second TM output end, wherein the TE polarized light is sent to the second TE input end through the third TE grating coupler and is then coupled into the third polarization splitter and the fourth polarization splitter in a sequence, and is coupled out to the fourth TE grating coupler through the second TE output end, and the TM polarized light is sent to the second TM input end through the third TM grating coupler and is coupled into the third polarization splitter and the fourth polarization splitter in a sequence, and is coupled out to the fourth TM grating coupler through the second TM output end. A beneficial effect is that by arranging the calibration structure to remove losses including GC, PS and curved waveguide in cases of TE polarized light and TM polarized light, it helps to extract the coupling loss of each edge coupler, and according to the on-chip mode field conversion loss calculated above, the optical field overlap loss of each edge coupler can be obtained, and thus respective values of the optical field overlap loss and the on-chip mode field conversion loss can be achieved, and it will improve the test efficiency save the space in the chip and therefore reduce the cost.

Preferably, the loopback structure includes a fifth edge coupler and a sixth edge coupler, the fifth edge coupler and the sixth edge coupler are coupled by a third curved waveguide, the PIC has a cutting lane arranged, wherein one end of the fifth edge coupler and one end of the sixth edge coupler adjacent to the TE grating coupling module are both located on the cutting lane, both a joint between the first edge coupler and the third edge coupler and a joint between the second edge coupler and the fourth edge coupler are located on the cutting lane, and the loopback structure forms a nested relationship with the first edge coupler, the first curved waveguide and the second edge coupler. A beneficial effect is the nested relationship formed by the loopback structure with the first edge coupler, the first curved waveguide and the second edge coupler will save the space and thus reduce the cost.

Preferably, the first edge coupler, the second edge coupler, the fifth edge coupler and the sixth edge coupler each forms an angle A with a straight line where the cutting lane is located, wherein 0°<A <180°.

Preferably, a first joint area is arranged between the first edge coupler and the third edge coupler, a second joint area is arranged between the second edge coupler and the fourth edge coupler, and the cutting lane is arranged on the first joint area and the second joint area.

Preferably, one end of the fifth edge coupler adjacent to the cutting lane is formed with a third joint area, and one end of the sixth edge coupler adjacent to the cutting lane is formed with a fourth joint area.

Preferably, gaps are respectively arranged both between the third joint area and the cutting lane and between the fourth joint area and the cutting lane.

Preferably, the first joint area, the second joint area, the third joint area and the fourth joint area are all arranged on the cutting lane.

Preferably, the cutting lane is configured to have a first etching region and a second etching region.

Preferably, the first etching region and the third joint area are at least partially overlapped, the second etching region and the fourth joint area are at least partially overlapped.

Preferably, a gap is formed between the first etching region and the fifth edge coupler, and a gap is formed between the second etching region and the sixth edge coupler.

Preferably, the loopback structure is arranged inside the cascaded test structure.

Preferably, an end of the fifth edge coupler and an end of the sixth edge coupler are respectively arranged on different end faces of the chip.

Preferably, a number of the edge coupler groups is at least two groups, and two ends of two adjacent edge coupler groups are connected with each other.

Preferably, the first polarization splitter, the second polarization splitter, the third polarization splitter and the fourth polarization splitter are each replaced by a polarization splitting rotator, and the first TM grating coupler, the second TM grating coupler, the third TM grating coupler and the fourth TM grating coupler are each replaced by a TE grating coupler.

The present invention further provides an edge coupler test method, applied to the edge coupler test device stated above, and the edge coupler test method including steps of:
before cutting a chip, coupling an initial polarized light into a TE grating coupling module or a TM grating coupling module according to a type of the initial polarized light; and obtaining a first polarized light after having been tested by the cascaded test structure, wherein a power of the initial polarized light is P0, and a power of the first polarized light is P1;
inputting the initial polarized light into the calibration structure to obtain a polarized light having been calibrated, wherein a power of the polarized light having been calibrated is P2; and
calculating an on-chip mode field conversion loss of each edge coupler in the cascaded test structure according to the power P1 of the first polarized light and the power P2 of the polarized light having been calibrated.

A beneficial effect of the edge coupler test method disclosed by the present invention is that by coupling the TE polarized light or the TM polarized light into the cascaded test structure for a test through the TE grating coupling module or the TM grating coupling module, a first polarized light having been coupled out correspondingly and then the polarized light having been calibrated by calibrating through the calibration structure can be obtained, and thus calculating the on-chip mode field conversion loss of each edge coupler according to a power of the first polarized light and the polarized light having been calibrated can be followed.

Preferably, the method further includes steps of:
after the chip is cut along the cutting lane, inputting the initial polarized light into the loopback structure through the fifth edge coupler and outputting a third polarized light from the sixth edge coupler, wherein a power of the third polarized light is P3;
calculating a coupling loss of each edge coupler in the loopback structure according to the power of the initial polarized light and the power of the third polarized light; and
calculating an optical field overlap loss according to the on-chip mode field conversion loss and the coupling loss.

The present invention further provides a test array, comprising a plurality of the edge coupler test devices stated above, the plurality of the edge coupler test devices are arrayed on a PIC, while each of the edge coupler test devices is not exactly the same.

### BRIEF DESCRIPTION OF DRAWINGS

FIG. 1 illustrates a schematic diagram on a butt-coupling between an edge coupler test structure and the optical fiber array in the prior art;
FIG. 2 illustrates a structural schematic diagram on the edge coupler test device disclosed by the present invention;
FIG. 3 illustrates a schematic diagram on an engagement of a structure having been cut of the edge coupler test device disclosed by the present invention with the optical fiber array;
FIG. 4 illustrates a structural schematic diagram on a cascaded test structure comprising 4N edge couplers in the edge coupler test device disclosed by the present invention;
FIG. 5 illustrates a schematic structural diagram when an edge coupler is arranged obliquely in the edge coupler test device disclosed by the present invention;
FIG. 6 illustrates a schematic structural diagram when arranging the first joint area and the second joint area in the edge coupler test device disclosed by the present invention;
FIG. 7 illustrates a schematic structural diagram when arranging the third joint area and the fourth joint area in the edge coupler test device disclosed by the present invention;
FIG. 8 illustrates a schematic structural diagram on all the first joint area, the second joint area, the third joint area and the fourth joint area being arranged on the cutting lane in the edge coupler test device disclosed by the present invention;
FIG. 9 illustrates a schematic structural diagram on setting the first etching region and the second etching region in the edge coupler test device disclosed by the present invention;
FIG. 10 illustrates a schematic structural diagram on a partial overlap between the etching region and the joint area in the edge coupler test device disclosed by the present invention;
FIG. 11 illustrates a schematic structural diagram on a polarization splitting rotator being adopted in the edge coupler test device disclosed by the present invention;
FIG. 12 illustrates a schematic structural diagram on a loopback structure arranged inside the cascaded test structure of the edge coupler test device disclosed by the present invention;
FIG. 13 illustrates a schematic structural diagram when the fifth edge coupler and the sixth edge coupler are arranged opposite to each other in the edge coupler test device disclosed by the present invention;
FIG. 14 illustrates a flow chart on the edge coupler test method disclosed by the present invention;
FIG. 15 illustrates a schematic structural diagram on the test array disclosed by the present invention.

### SPECIFIC EMBODIMENTS

In order to make objectives, technical solutions and advantages of the present invention clearer, the technical solutions in embodiments of the present invention will be clearly and completely described below in conjunction with the drawings of the present invention. Obviously, the described embodiments are part of, but not all of, the embodiments of the present invention. Based on the embodiments of the present invention, all other embodiments obtained by those of ordinary skill in the art without creative work are included in the protection scope of the present invention. Unless otherwise defined, technical or scientific terms used herein should have the meanings usually understood by those of ordinary skill in the field to which the present invention belongs. As used herein, the terms "comprise" and the like are intended to mean that an element or item appearing before the term encompasses elements or items appearing after the term and their equivalents, but does not exclude other elements or items.

Aiming at the problems existed in the prior art, the embodiments of the present invention provide an edge coupler test device, arranged on a PIC 10, referring to FIG. 2, comprising:
a loopback structure 20, arranged on the PIC 10, and configured to couple with an external optical fiber array;
a cascaded test structure 30, arranged on the PIC 10, and configured to test an on-chip mode field conversion loss of a TE polarized light and a TM polarized light;
a polarization splitting module 40, connected to the cascaded test structure 30, and configured to couple the TE polarized light and the TM polarized light into the cascaded test structure 30 and couple them out;
a TE grating coupling module 50, connected to both input end and output end of the polarization splitting module 40, and configured to couple the TE polarized light into the cascaded test structure 30 and couple it out;
a TM grating coupling module 60, connected to both the input end and the output end of the polarization splitting module 40, and configured to couple the TM polarized light into the cascaded test structure 30 before coupling it out; and
a calibration structure 70, the calibration structure 70 configured to acquire a calibration data of both the TE polarized light and the TM polarized light.

In the present embodiment, by adding a cascaded test structure 30 on a conventional loopback structure 20, a test is performed on both the TE polarized light and the TM polarized light. Since both the TE grating coupling module 50 and the TM grating coupling module 60 share a common cascaded test structure 30 for a test, it is possible to effectively reduce an internal space occupied in the chip. And by means of the polarization splitting module 40, the TE polarized light and the TM polarized light are coupled into and coupled out to the cascaded test structure 30 respectively for a test through the polarization splitting module 40 so as to facilitate the test of the on-chip mode field conversion loss under two polarization states of both TE and TM, and thus the test efficiency of the chip is improved.

It should be noted that in embodiments described hereafter, for structural descriptions of the polarization splitting module 40 and the calibration module 50, please mainly refer to directions as indicated by arrows in FIG. 2. The input as shown herein can also act as an output, and the output as shown herein can also act as an input. That is to say, the direction of the light to be coupled in or out can be exchanged, and can be not limited to the direction indicated by the arrows in FIG. 2, and no more detail will be further described here.

In some embodiments, continue to refer to FIG. 2, the cascaded test structure 30 comprises a first curved waveguide 307 and an edge coupler group. The edge coupler group comprises a first edge coupler 301, a second edge coupler 302, a third edge coupler 303 and a fourth edge coupler 304, wherein one end of the first edge coupler 301 is coupled to one end of the third edge coupler 303, another end of the first edge coupler 301 is coupled to one end of the second edge coupler 302 by the first curved waveguide 307, another end of the second edge coupler 302 is coupled to one end of the fourth edge coupler 304, another end of the third edge coupler 303 is coupled to one end of the fourth edge coupler 304, and another end of the third edge coupler 303 and another end of the fourth edge coupler 304 are both coupled to the polarization splitting module 40. The polarization splitting module 40 comprises a first polarization splitter 401 and a second polarization splitter 402, wherein an input end of the first polarization splitter 401 comprises a first TE input end and a first TM input end, an output end of the first polarization splitter 401 is coupled to the cascaded test structure 30. An input end of the second polarization splitter 402 is coupled to an output end of the cascaded test structure 30, an output end of the second polarization splitter 402 comprises a first TE output end and a first TM output end. The TE grating coupling module 50 comprises a first TE grating coupler 501 and a second TE grating coupler 502, the TM grating coupling module 60 comprises a first TM grating coupler 601 and a second TM grating coupler 602. Herein, the TE polarized light is coupled into the first TE input end through the first TE grating coupler 501, and is then coupled into the cascaded test structure 30 and coupled out to the second TE grating coupler 502 through the first TE output end. The TM polarized light is coupled into the first TM input end through the first TM grating coupler 601 and is then coupled into the cascaded test structure 30 and coupled out to the second TM grating coupler 602 through the first TM output end.

It is noted that the polarization splitting module 40 can be configured to split two polarized lights or combine two polarized lights. Thus, such a structure is a reversible structure, which can be selected according to an actual usage scenario and requirement.

In the present embodiment, the calibration structure 70 is configured to acquire calibration data of the TE polarized light and the TM polarized light. The calibration structure 70 comprises a third polarization splitter 701, a fourth polarization splitter 702, a third TE grating coupler 703, a fourth TE grating coupler 704, a third TM grating coupler 705 and a fourth TM grating coupler 706, wherein an output end of the third polarization splitter 701 is coupled to the input end of the fourth polarization splitter 702 by a second curved waveguide 707. An input end of the third polarization splitter 701 comprises a second TE input end and a second TM input end, an output end of the fourth polarization splitter 702 comprises a second TE output end and a second TM output end. Herein, the TE polarized light is sent to the second TE input end through the third TE grating coupler 703 and is then coupled into the third polarization splitter 701 and the fourth polarization splitter 702 in a sequence, and is coupled out to the fourth TE grating coupler 704 through the second TE output end. The TM polarized light is sent to the second TM input end through the third TM grating coupler 705 and is then coupled into the third polarization splitter 701 and the fourth polarization splitter 702 in a sequence, and is coupled out to the fourth TM grating coupler 706 through the second TM output end.

In an example, the first edge coupler 301 is marked as EC#2, the second edge coupler 302 is marked as EC#3, the third edge coupler 303 is marked as EC#5, and the fourth edge coupler 304 is marked as EC#6, the first polarization splitter 401 is marked as PS#1, the second polarization splitter 402 is marked as PS#2, the first TE grating coupler 501 is marked as TE GC#1, the second TE grating coupler 502 is marked as TE GC#2, the first TM grating coupler 601 is marked as TM GC#1, the second TM grating coupler 602 is marked as TM GC#2, the third polarization splitter 701 is marked as PS#3, the fourth polarization splitter 702 is marked as PS#4, the third TE grating coupler 703 is marked as TE GC#3, the fourth TE grating coupler 704 is marked as TE GC#4. The third TM grating couplers 705 is marked as TM GC#3, and the fourth TM grating couplers 706 is marked as TM GC#4. Referring to FIG. 2, taking a test for the TE polarized light as an example. First, a TE polarized light with an initial power P0 is coupled, through the first TE grating coupler 501, into the first polarization splitter 401, the third edge coupler 303, the first edge coupler 301, the second edge coupler 302 and the fourth edge coupler 304 in a sequence, and is further coupled into the second polarization splitter 402, and thus a power of the light being coupled out to the second TE grating coupler 502 is P1_TE. After that, in a similar manner, a TE polarized light with an initial power P0 is sent into the calibration structure 70, and is then coupled, through the third TE grating coupler 703, into the third polarization splitter 701, the fourth polarization splitter 702 and the fourth TE grating coupler 704 in a sequence, and an optical signal is coupled out, and a power of the optical signal being coupled out is P2_TE, thus an on-chip mode field conversion loss of each edge coupler in the cascaded test structure 30 to the TE polarized light is: IL_1_TE=(P1_TE-P2_TE)/4. Similarly, a TM polarized light with a power P0 is coupled into the first polarization splitter 401 from the first TM grating coupler 601, and is then coupled into the third edge coupler 303, the first edge coupler 301, and the second edge coupler 302 and the fourth edge coupler 304 in a sequence, and is coupled out to the second TM grating coupler 602 through the second polarization splitter 402, and a power of the optical signal being coupled out is P1_TM. While a TM polarized light with a power P0 is coupled into the calibration structure 70 through the third TM grating coupler 705, the third polarization splitter 701, the fourth polarization splitter 702, and the fourth TM grating coupler 706 in a sequence, and thus an optical signal is coupled out, a power of the optical signal being coupled out is P2_TM, and an on-chip mode field conversion loss of each edge coupler EC in the cascaded test structure 30 to the TM polarized light is: IL_1_TM=(P1_TM-P2_TM)/4. Through a calculation method stated above, the on-chip mode field conversion loss of each edge coupler EC can be calculated.

In the present embodiment, the loopback structure 20 comprises a fifth edge coupler 201 and a sixth edge coupler 202, wherein the fifth edge coupler 201 and the sixth edge coupler 202 are coupled by a third curved waveguide 205, the PIC 10 has a cutting lane 80 arranged, one end of the fifth edge coupler 201 and one end of the sixth edge coupler 202 placed adjacent to the TE grating coupling module 50 are both located on the cutting lane 80, and a joint of the first edge coupler 301 and the third edge coupler 303 and a joint of the second edge coupler 302 and the fourth edge coupler 304 are both located on the cutting lane 80. The loopback structure 20 forms a nested relationship with the first edge coupler 301, the first curved waveguide 307 and the second edge coupler 302, in order to save a chip space and reduce a cost. Due to the PIC 10 having the loopback structure 20 arranged, aiming to test the coupling loss of each edge coupler EC, it is possible to adopt the loopback structure 20 to further test the coupling loss of each edge coupler EC.

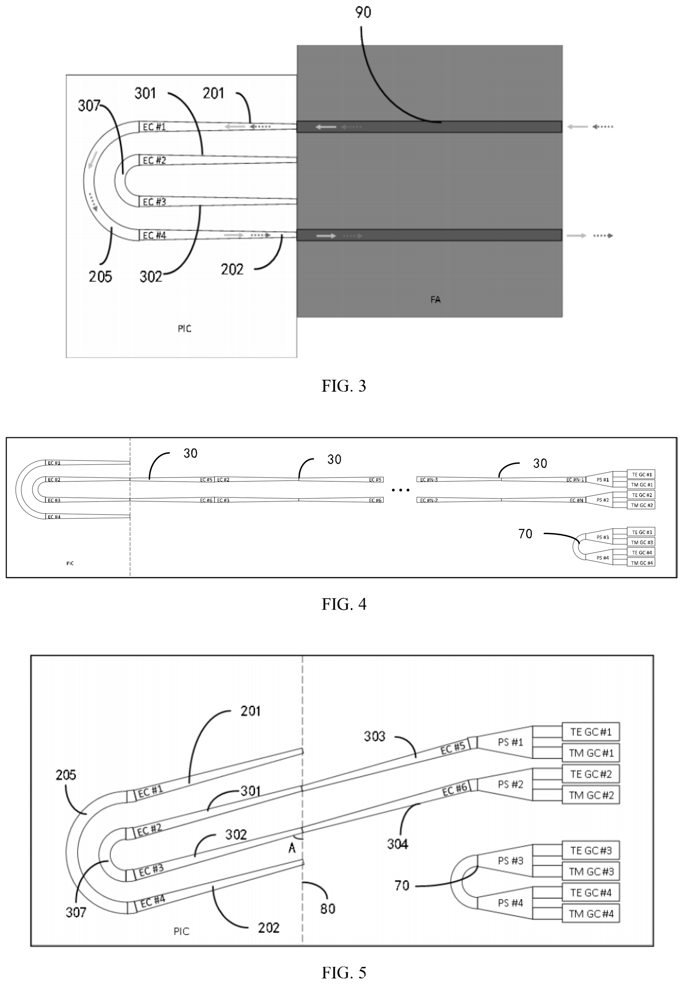

In an embodiment, referring to FIG. 3 , the PIC 10 is cut along the cutting lane 80, so that the first edge coupler 301, the third edge coupler 302, the fifth edge coupler 201 and the sixth edge coupler 202 on a left side of the PIC 10 forms an independent chip. The TE polarized light and the TM polarized light with a power P0 having been tested before are set to be butt-coupled with an optical fiber array 90 in a conventional method for a test. Specifically, take a TE polarized light with a power P0 as an example, an output power of the TE polarized light, after passing through the loopback structure 20 formed by the fifth edge coupler 201 and the sixth edge coupler 202 of the TE polarized light, is P3_TE , and thus a coupling loss of the edge coupler to the TE polarized light is IL_TE=(P3_TE-P0)/2.. According to the on-chip mode field conversion loss IL_1_TE for the TE polarized light having been calculated previously, an optical field overlap loss as IL_2_TE=IL_TE-IL_1_TE between the edge coupler and the optical fiber can be calculated. Similarly, an output power of a TM polarized light with a power P0, after passing through the loopback structure 20, is P3_TM, and thus a coupling loss of the edge coupler to the TM polarized light is IL_TM=(P3_TM-P0)/2. According to the on-chip mode field conversion loss IL_1_TM having been calculated previously for the TM polarized light, an optical field overlap loss as IL_2_TM=IL_TM-IL_1_TM between the edge coupler and the optical fiber can be calculated.

Therefore, by means of the test device of the present invention, it is possible to test the coupling loss of both the TE polarized light and the TM polarized light respectively, and it is also able to decompose the on-chip mode field conversion loss and the optical field overlap loss of the optical fiber, which can not only save the space in the chip but also improve the efficiency and reduce the cost.

It should be noted that, in the cascaded test structure 30, the number of the edge coupler groups can be at least two groups, and both ends of two adjacent edge coupler groups are coupled with each other. Referring to FIG. 4, the number of the edge couplers is not limited to four, it can also be 4N, wherein N is a positive integer, so as to facilitate a cascaded test.

In a plurality of embodiments, referring to FIG. 5, the first edge coupler 301, the second edge coupler 302, the fifth edge coupler 201 and the sixth edge coupler 202 each forms an angle A with a straight line where the cutting lane 80 is located, wherein 0°<A <180°. By arranging the angle A having a certain inclination, it is possible to lower or reduce a light reflection on the coupling edge.

In an example, the angle A is equal to 90°, that is, the first edge coupler 301, the second edge coupler 302, the fifth edge coupler 201 and the sixth edge coupler 202 are each set perpendicular to the straight line where the cutting lane 80 is located.

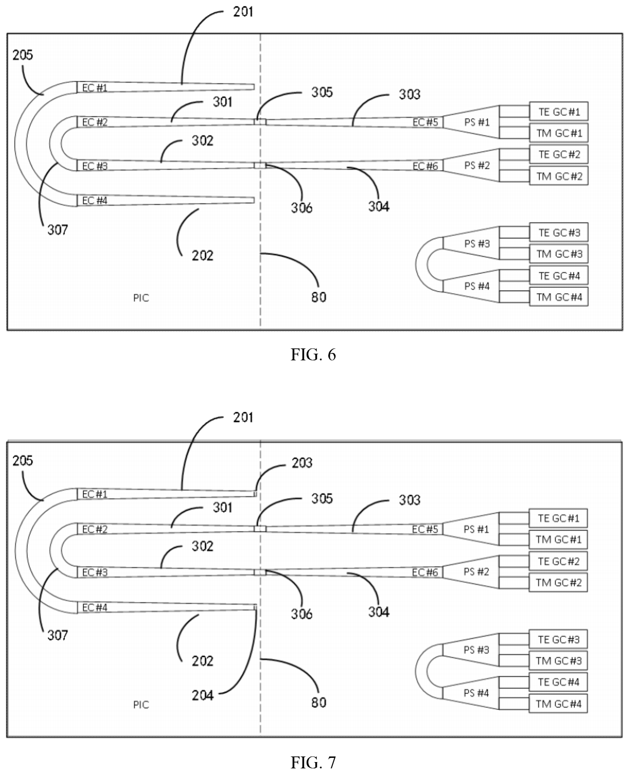

In other embodiments, referring to FIG. 6, a first joint area 305 is placed between the first edge coupler 301 and the third edge coupler 303, a second joint area 306 is placed between the second edge coupler 302 and the fourth end coupler 304. The cutting lane 80 is set to be located on the first joint area 305 and the second joint area 306, wherein a waveguide width of the first joint area 305 and a waveguide width of the second joint area 306 are uniform, and a width of the first joint area 305 is equal to an end width of the first edge coupler 301 and an end width of the third edge coupler 303, a width of the second joint area 306 is equal to an end width of the second edge coupler 302 and an end width of the fourth edge coupler 304.

Further, a gap is set between an end of the fifth edge coupler 201 and the cutting lane 80, and a gap is set between an end of the sixth edge coupler 202 and the cutting lane 80 so as to protect the edge couplers. That is, it is guaranteed that when cutting along the cutting lane 80, there are no defects generated to the end of the fifth edge coupler 201 and the end of the sixth edge coupler 202, including rough edges, cracks, wrinkles, burrs and more, so that a coupling loss can still be normally tested after cutting.

In other embodiments, referring to FIG. 7, one end of the fifth edge coupler 201 adjacent to the cutting lane 80 has a third joint area 203 therein, and one end of the sixth edge coupler 202 adjacent to the cutting lane 80 has a fourth joint area 204 therein. There is a gap arranged between the third joint area 203 and the cutting lane 80, and a gap arranged between the fourth joint area 204 and the cutting lane 80. The arrangement of the third joint area 203 and the fourth joint area 204 provides a protection for the edge coupler. That is, it is guaranteed that when cutting along the cutting lane 80, there is no effect generated onto the fifth edge coupler 201 and the sixth edge coupler 202, including rough edges, cracks, wrinkles, burrs and more.

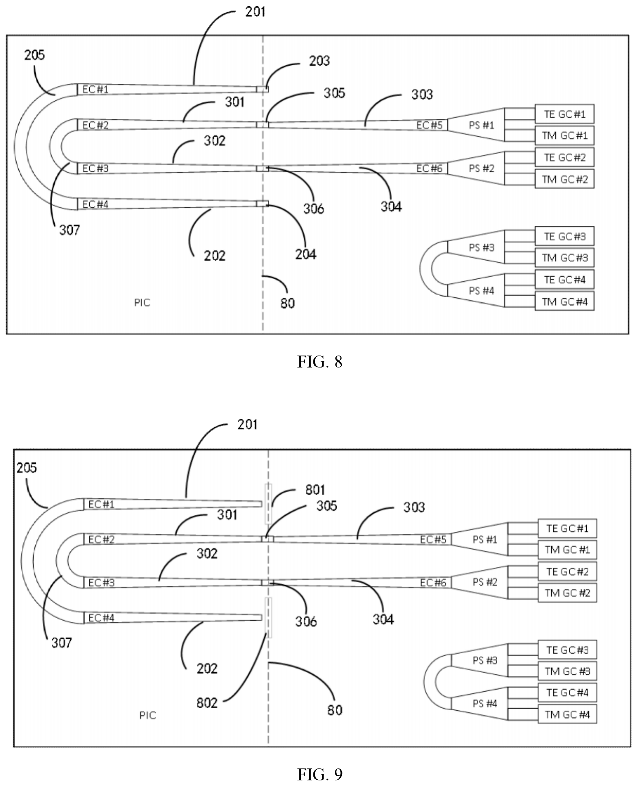

In some embodiments, referring to FIG. 8, the first joint area 305, the second joint area 306, the third joint area 203 and the fourth joint area 204 are each arranged on the cutting lane 80, so that when cutting a chip along the cutting lane 80, even with the cutting offset caused by insufficient control of cutting position accuracy, it will not lead to uncontrollable width of the cut-out end face of the waveguide..

In another embodiment, referring to FIG. 9, the cutting lane 80 has a first etching region 801 and a second etching region 802 therein. By arranging the first etching region 801 and the second etching region 802, it is possible to lower or reduce the impact of end face roughness on the edge coupler due to cutting. Performing an etching to a part of the end face by adopting a semiconductor etching process, it makes an etched end face have a good flatness, thus improving a coupling effect. Herein, there is no etching will be applied between the first edge coupler 301 and the second edge coupler 302, and between the third edge coupler 303 and the fourth edge coupler 304 to ensure that the cascaded test structure 30 is structurally continuous without interruption, so that the on-chip mode field conversion test can be normally carried out before cutting.

In some embodiments, there is a gap arranged between the first etching region 801 and the fifth edge coupler 201, and a gap arranged between the second etching region 802 and the sixth edge coupler 202 so as to avoid a damage to the end of the loopback structure 20 caused by etching.

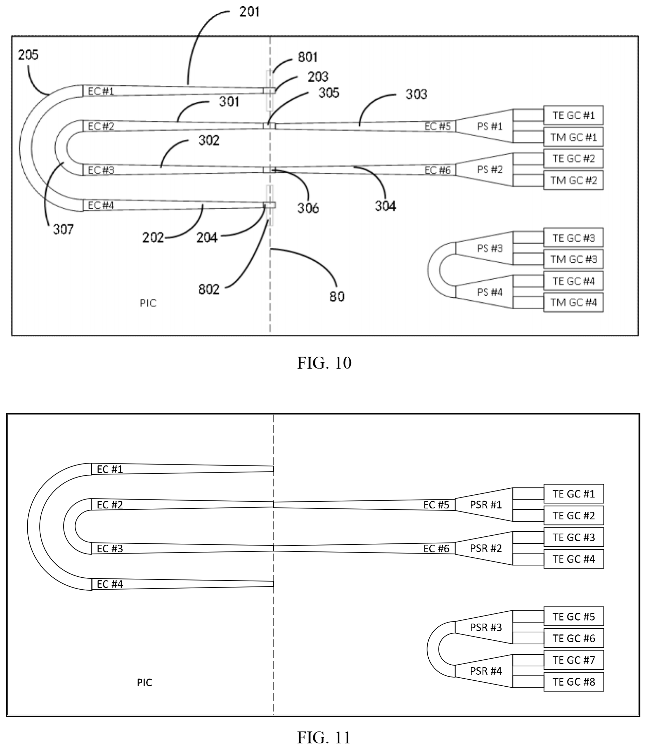

In another embodiment, referring to FIG. 10, the first etching region 801 and the third joint area 203 are arranged to be at least partially overlapped, the second etching region 802 and the fourth joint area 204 are arranged to be at least partially overlapped. By arranging the first etching region 801 and the third joint area 203 at least partially overlapped and arranging the second etching region 802 and the fourth joint area 204 at least partially overlapped, it can be guaranteed that when cutting the chip along the cutting lane 80, even with the cutting offset caused by insufficient control of cutting position accuracy, it will not lead to uncontrollable width of the cut-out end face of the waveguide.

In other embodiments, referring to FIG. 11, the polarization splitter in the polarization splitter module 40 may also adopt a polarization splitter rotator (PSR), while a grating coupler applied to the TM polarization shall also be changed into a grating coupler applied to the TE polarization. That is, the first polarization splitter 401, the second polarization splitter 402, the third polarization splitter 701 and the fourth polarization splitter 702 are all replaced with the polarization splitter rotators, while the first TM grating coupler 601, the second TM grating coupler 602, the third TM grating coupler 705, and the fourth TM grating coupler 706 are all replaced with the TE grating couplers. By converting the TE polarization light into the TM polarization light, a test for both polarization states can be also achieved. For example, the TE polarized light can enter from the TE GC#1, pass through a PSR#1 to continue to maintain TE polarization to enter a cascaded EC, and then pass through a PSR#2 and exit out of the TE GC#3. If the TE polarized light enters from the TE GC#2, it will be converted into the TM polarization by passing through the PSR#1. The TM polarized light will continuously pass through the cascaded EC, and then be converted back to the TE polarized light through the PSR#2, and come out of the TE GC#4.

In an example, an incident light with an optical power P0 and a polarization state set as TE, will enter from the TE GC#1, pass through a cascaded test structure having two PSR and four edge couplers, and exit out of the TE GC#3 and the output power of the light is P1_TE. And a light with a same optical power will enter the calibration structure from the TE GC#5, pass through two PSR and be output out of the TE GC#7, and the output power of the light is P2_TE, thus an on-chip mode field conversion loss of each EC is IL_1_TE=(Pl_TE-P2_TE)/4. Similarly, a TE polarized light enters from the TE GC#2, passes through a cascaded structure having two PSR and four ECs, and exits out of the TE GC#4, and the output power of the light is P1_TM, while a light with a same optical power enters the calibration structure from the TE GC#6, passes through two PSR and is output out of the TE GC#8, and the output power of the light is P2_TM, thus an on-chip mode field conversion loss of each EC is IL_1_TM=(P1_TM-P2_TM)/4. Since the test process is basically the same as the process stated above, no more details will be repeated herein. Wherein, the unit of P1_TE, P2_TE, P1_TM and P2_TM is each dBm, and the unit of IL_1_TE and IL_1_TM is dB.

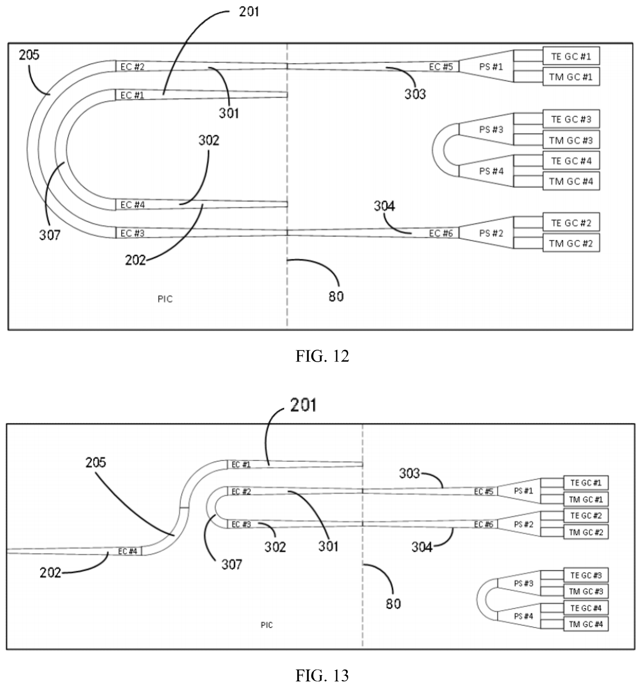

In some embodiments, referring to FIG. 12, the loopback structure 20 is arranged within the cascaded test structure 30. In some embodiments, the loopback structure 20 and the cascaded test structure 30 may also have no inner and outer nesting relationship, but are separated in different positions (not shown in the figures).

Further, referring to FIG. 13, the end of the fifth edge coupler 201 is arranged opposite to the end of the sixth end-face coupler 202.

It should be noted that, the present invention will have no specific limit on the position, the direction, and the angle with the end face of the fifth edge coupler 201 or the sixth edge coupler 202, and will not be repeated herein.

The test device of the present invention is set to have the TE grating coupling module, the TM grating coupling module and the polarization splitting module so that the TE polarized light and the TM polarized light can be respectively transmitted to the cascaded test structure for the coupling test, which facilitates to test the on-chip mode field conversion loss of the TE polarized light and the TM polarized light respectively by the cascaded test structure, and thus it is beneficial to save the space in the chip and improve the test efficiency, and further by the nested loopback structure and the suitable arrangement of the cutting lane it is able to test the respective values of the mode field conversion loss and the optical field overlap loss.

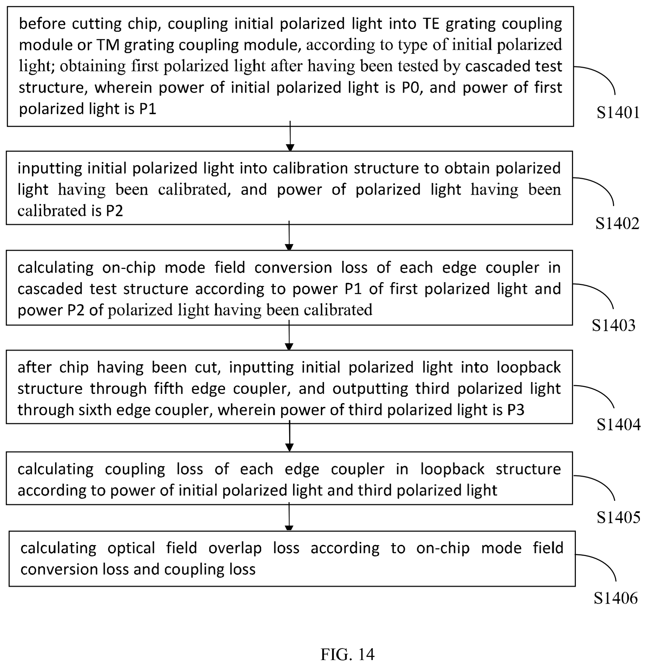

The present invention further discloses an edge coupler test method, applied to the edge coupler test devices stated above, referring to FIG. 14, the edge coupler test method comprises steps of:
S1401. before cutting a chip, coupling an initial polarized light into a TE grating coupling module or a TM grating coupling module, according to a type of the initial polarized light; and obtaining a first polarized light after having been tested by the polarization splitting module and the cascaded test structure, wherein a power of the initial polarized light is P0, and a power of the first polarized light is P1;
S1402. inputting the initial polarized light into the calibration structure to obtain a polarized light having been calibrated, wherein a power of the polarized light having been calibrated is P2; and
S1403. calculating an on-chip mode field conversion loss of each edge coupler in the cascaded test structure according to the power P1 of the first polarized light and the power P2 of the polarized light having been calibrated.

Wherein, the on-chip mode field conversion loss IL_1 equals to (P1-P2)/4.

Preferably, the method further comprises:
S1404. after the chip having been cut, inputting the initial polarized light into the loopback structure and outputting a third polarized light, wherein a power of the third polarized light is P3;
S1405. calculating a coupling loss of each edge coupler in the loopback structure according to the power of the initial polarized light and the power of the third polarized light;
   wherein, the coupling loss ILequals to (P3-P0)/2;
S1406. calculating an optical field overlap loss according to the on-chip mode field conversion loss and the coupling loss.

Wherein, the optical field overlap loss IL_2 equals to IL-IL_1.

Since a process and a principle of the method stated above are corresponding one-to-one to a working process of the edge coupler test device stated above, thus no more details are repeated herein.

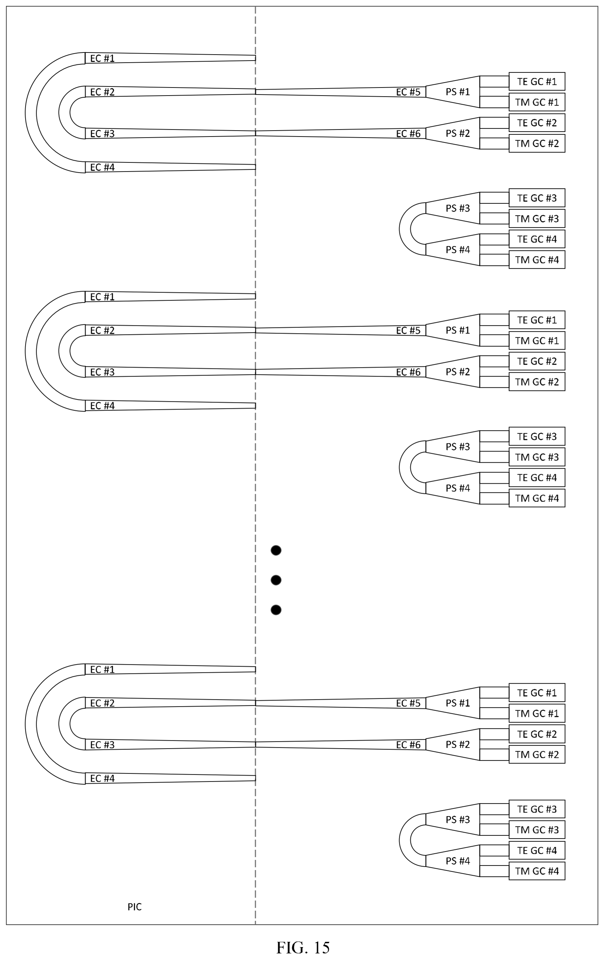

The present invention further discloses a test array, referring to FIG. 15, comprising a plurality of the edge coupler test devices stated above, the plurality of the edge coupler test devices are arranged on a PIC, and each of the edge coupler test devices is not exactly the same.

Wherein, a plurality of design parameters of each test device in the test array can be arranged same or different, to facilitate an application of an experimental design, while all test structures share a same cutting lane.

An integrated material platform on which the test structures stated above is located includes Bulk Si, Silicon-On-Isulator, Silicon-On-Sapphire, Silicon Dioxide, Aluminum Oxide, Indium Phosphide, Lithium Niobate, and a polymer thereof. A waveguide type of the test structure comprises a channel waveguide, a ridge waveguide, a slot waveguide, a diffusion waveguide, and a photonic crystal waveguide. A working wavelength range of the test structure comprises visible light band, O band, E band, S band, C band, L band, U band, and mid-infrared band; wherein, a working wavelength of each test structure in the array can be a same wavelength, or different wavelengths. An application field of the test structure comprises a LiDAR, light beam control, optical sensing, optical interconnection, free space optical communication, optical storage, optical computing, and more. A structural design of the EC may comprise but not limited to, an inverted taper, a stepped inverted taper, a cantilever beam, a side slot, a V-shaped groove, a multiple waveguide, a multilayer waveguide, a sub-wavelength structure, and more. A structural design of the PS and the PSR comprises, but not limited to, an adiabatic coupler, a curved coupler, a directional coupler, a Y-branch, a multi-mode interference structure, a sub-wavelength structure, and more. A structural design of the GC comprises, but is not limited to, a straight grating, a sector curved grating, a dual polarization grating, a multi-layer material grating, and more. A shape of the curved waveguide includes, but is not limited to, an arc shape, a line bend shape, an Euler bend shape or a sinusoidal shape.

While embodiments of the present invention are described in detail above, it is apparent to the technicians in the art that various modifications and variations may be made to the above-described embodiments. However, it should be appreciated that such modifications and variations fall within the scope and intention of the present invention as described in the claims. In addition, there may be other embodiments of the present invention described herein, which can be implemented or realized in various ways.

## Claims

1. An edge coupler test device, arranged on a photonic integrated circuit, **characterized by** comprising:
a loopback structure, arranged on the photonic integrated circuit, and configured to couple with an external optical fiber array;
a cascaded test structure, arranged on the photonic integrated circuit, and configured to test an on-chip mode field conversion loss of both a TE polarized light and a TM polarized light;
a polarization splitting module, connected to the cascaded test structure, and configured to couple the TE polarized light and the TM polarized light respectively into the cascaded test structure for a test and couple them out respectively;
a TE grating coupling module, connected to both an input end and an output end of the polarization splitting module, and configured to couple the TE polarized light into the cascaded test structure for a test and couple it out;
a TM grating coupling module, connected to both the input end and the output end of the polarization splitting module, and configured to couple the TM polarized light into the cascaded test structure for a test and couple it out; and
a calibration structure, configured to acquire a calibration data of both the TE polarized light and the TM polarized light.

2. The edge coupler test device according to claim 1, **characterized in that** the cascaded test structure comprises a first curved waveguide and an edge coupler group, the edge coupler group comprises a first edge coupler, a second edge coupler, a third edge coupler and a fourth edge coupler, wherein one end of the first edge coupler is coupled to one end of the third edge coupler, another end of the first edge coupler is coupled to one end of the second edge coupler by the first curved waveguide, another end of the second edge coupler is coupled to one end of the fourth edge coupler, and both another end of the third edge coupler and another end of the fourth edge coupler are coupled to the polarization splitting module.

3. The edge coupler test device according to claim 2, **characterized in that** the polarization splitting module comprises a first polarization splitter and a second polarization splitter, an input end of the first polarization splitter comprises a first TE input end and a first TM input end, wherein an output end of the first polarization splitter is coupled to the cascaded test structure, an input end of the second polarization splitter is coupled to an output end of the cascaded test structure; and an output end of the second polarization splitter comprises a first TE output end and a first TM output end, the TE grating coupling module comprises a first TE grating coupler and a second TE grating coupler, the TM grating coupling module comprises a first TM grating coupler and a second TM grating coupler, wherein the TE polarized light is coupled into the first TE input end through the first TE grating coupler and is then coupled into the cascaded test structure and coupled out to the second TE grating coupler through the first TE output end; and the TM polarized light is coupled into the first TM input end through the first TM grating coupler and is then coupled into the cascaded test structure and coupled out to the second TM grating coupler through the first TM output end.

4. The edge coupler test device according to claim 2, **characterized in that** the number of the edge coupler groups is at least two groups, and two ends of two adjacent edge coupler groups are coupled with each other.

5. The edge coupler test device according to claim 4, **characterized in that** the calibration structure comprises a third polarization splitter, a fourth polarization splitter, a third TE grating coupler, a fourth TE grating coupler, a third TM grating coupler and a fourth TM grating coupler, wherein an output end of the third polarization splitter is coupled to an input end of the fourth polarization splitter by a second curved waveguide; and an input end of the third polarization splitter comprises a second TE input end and a second TM input end, an output end of the fourth polarization splitter comprises a second TE output end and a second TM output end, wherein the TE polarized light is sent to the second TE input end through the third TE grating coupler and is then coupled into the third polarization splitter and the fourth polarization splitter in a sequence and is coupled out to the fourth TE grating coupler through the second TE output end, and the TM polarized light is sent to the second TM input end through the third TM grating coupler and is then coupled into the third polarization splitter and the fourth polarization splitter in a sequence and is coupled out to the fourth TM grating coupler through the second TM output end.

6. The edge coupler test device according to claim 3, **characterized in that** the loopback structure comprises a fifth edge coupler and a sixth edge coupler, the fifth edge coupler and the sixth edge coupler are coupled by a third curved waveguide, the photonic integrated circuit has a cutting lane arranged, wherein one end of the fifth edge coupler and one end of the sixth edge coupler adjacent to the TE grating coupling module are both located on the cutting lane, both a joint between the first edge coupler and the third edge coupler and a joint between the second edge coupler and the fourth edge coupler are located on the cutting lane, and the loopback structure forms a nested relationship with the first edge coupler, the first curved waveguide and the second edge coupler.

7. The edge coupler test device according to claim 6, **characterized in that** the first edge coupler, the second edge coupler, the fifth edge coupler and the sixth edge coupler each forms an angle A with a straight line where the cutting lane is located, wherein 0°<A <180°.

8. The edge coupler test device according to claim 6, **characterized in that** a first joint area is arranged between the first edge coupler and the third edge coupler, a second joint area is arranged between the second edge coupler and the fourth edge coupler, and the cutting lane is arranged on the first joint area and the second joint area.

9. The edge coupler test device according to claim 8, **characterized in that** one end of the fifth edge coupler adjacent to the cutting lane is formed with a third joint area, and one end of the sixth edge coupler adjacent to the cutting lane is formed with a fourth joint area.

10. The edge coupler test device according to claim 9, **characterized in that** gaps are respectively formed between the third joint area and the cutting lane and between the fourth joint area and the cutting lane.

11. The edge coupler test device according to claim 9, **characterized in that** the first joint area, the second joint area, the third joint area and the fourth joint area are all arranged on the cutting lane.

12. The edge coupler test device according to claim 9, **characterized in that** the cutting lane is configured to have a first etching region and a second etching region.

13. The edge coupler test device according to claim 12, **characterized in that** the first etching region and the third joint area are at least partially overlapped, and the second etching region and the fourth joint area are at least partially overlapped.

14. The edge coupler test device according to claim 12, **characterized in that** a gap is formed between the first etching region and the fifth edge coupler, and a gap is formed between the second etching region and the sixth edge coupler.

15. The edge coupler test device according to claim 6, **characterized in that** the loopback structure is arranged inside the cascaded test structure.

16. The edge coupler test device according to claim 6, **characterized in that** an end of the fifth edge coupler and an end of the sixth edge coupler are respectively arranged on different end faces of the chip.

17. The edge coupler test device according to claim 5, **characterized in that** the first polarization splitter, the second polarization splitter, the third polarization splitter and the fourth polarization splitter are each replaced by a polarization splitting rotator, and the first TM grating coupler, the second TM grating coupler, the third TM grating coupler and the fourth TM grating coupler are each replaced by a TE grating coupler.

18. An edge coupler test method, **characterized by** being applicable to the edge coupler test device according to claim 4, the method comprising steps of:
before cutting a chip, coupling an initial polarized light into a TE grating coupling module or a TM grating coupling module according to a type of the initial polarized light; and obtaining a first polarized light after having been tested by the cascaded test structure, wherein a power of the initial polarized light is P0, and a power of the first polarized light is P1;
inputting the initial polarized light into the calibration structure to obtain a polarized light having been calibrated, wherein a power of the polarized light having been calibrated is P2; and
calculating an on-chip mode field conversion loss of each edge coupler in the cascaded
test structure according to the power P1 of the first polarized light and the power P2 of the polarized light having been calibrated.

19. The method according to claim 18, **characterized by** comprising:
after the chip having been cut along the cutting lane, inputting the initial polarized light into the loopback structure through the fifth edge coupler and outputting a third polarized light from the sixth edge coupler, wherein a power of the third polarized light is P3;
calculating a coupling loss of each edge coupler in the loopback structure according to the power of the initial polarized light and the power of the third polarized light; and
calculating an optical field overlap loss according to the on-chip mode field conversion loss and the coupling loss.

20. A test array, **characterized by** comprising a plurality of the edge coupler test devices according to claims 1 to 17, wherein the plurality of the edge coupler test devices are arrayed on the photonic integrated circuit, and each of the edge coupler test devices is not the same.
